# EUROPEAN PATENT APPLICATION

(11) **EP 1 386 826 A1**
(43) Date of publication of application: **04.02.2004**
(21) Application number: 03250310.4
(22) Date of filing: 17.01.2003
(51) Int. Cl.: B62D 15/02, B62D 5/04

(54) **Steering rotation detector**

(30) Priority: 22.07.2002 JP 2002212266
(71) Applicant: TAMAGAWA SEIKI KABUSHIKI KAISHA, Iida-shi, Nagano-ken (JP)
(72) Inventor: Mimura, Hisashi, c/o Tamagawa Seiki K.K., Iida-shi, Nagano-ken (JP)
(74) Representative: Mounteney, Simon James

(57) **Abstract**

In a steering rotation detector a rotation angle of a first shaft (1) of a steering wheel is detected by a first rotation detecting unit (7) of a resolver, a rotation angle of a second shaft (3) of front wheels side is detected by a second rotation detecting unit (8) of a resolver, whereby a power steering with high precision is obtained. The detector enables the detection of a difference between rotation angles of respective shafts by using non-contact type resolvers with high precision.

## Description

### BACKGROUND OF THE INVENTION

### 1. Field of the Invention

The present invention relates to a steering rotation detector, and more particularly, to a novel improvement for detecting rotation angles of first and second shafts by resolvers and determining an angular difference between the respective shafts by means of a rotation angle signal with constantly high precision.

### 2. Description or the Related Art

In a conventionally used steering rotation detector of this kind, rotation angles of the first and second shafts are detected using variations of voltage values obtained by a potentiometer, and the detected rotation angles are converted to angle signals.

The conventional steering rotation detector is constructed as described above and therefore has the following problem.

In short, since the potentiometer is either constructed such that a contact point slides on a resistive film or constructed such that the contact point slides on a winding, the use over a long period and under a condition of a severe environmental resistance especially causes reduction of the reliability.

### SUMMARY OF THE INVENTION

The present invention has been made to solve the above-mentioned problem, and an object of the invention is to particularly provide a steering rotation detector constructed such that rotation angles of first and second shafts are detected by resolvers, rotation angles are detected by the resolvers with constantly high precision, and an angular difference between the respective shafts is determined by means of a rotation angle signal with constantly high precision.

According to the present invention, there is provided a steering rotation detector, comprising: a first rotation detecting unit for detecting a first rotation angle of a first shaft connected to a steering wheel; and a second rotation detecting unit for detecting a second rotation angle of a second shaft connected to the first shaft, in which an angular difference between the first and second rotation angles detected by the first and second rotation detecting units is obtained at the same time when wheels are steered by means of rotation of the second shaft, and each of the first and second rotation detecting units is a resolver. Further, the resolver may be a variable reluctance type resolver. Further, the resolver may be a rotary transformer type resolver.

### BRIEF DESCRIPTION OF THE DRAWINGS

In the accompanying drawings:
Fig. 1 is a diagram showing a structure of a steering rotation detector according to the present invention; and
Fig. 2 is a block diagram showing another structure of Fig.1.

### DETAILED DESCRIPTION OF THE PREFERRED EMBODIMENT

Hereinafter, the preferred embodiment of the steering rotation detector according to the present invention will be described with reference to the accompanying drawings.

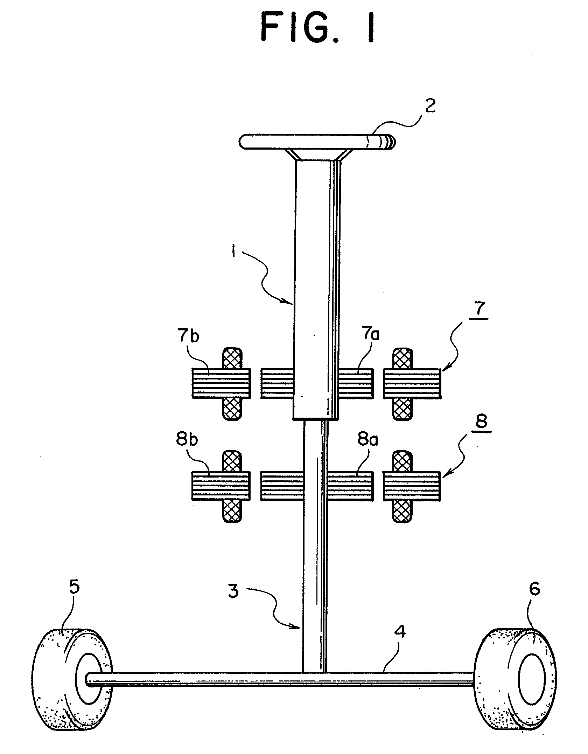

In Fig. 1, reference numeral 1 denotes a first shaft connected to a steering wheel 2. The first shaft 1 is connected to a second shaft 3 so as to rotate at a reduced speed.

Here, the first shaft 1 and the second shaft 3 are connected to each other through a not-shown but well-known deceleration mechanism.

A leading end portion of the second shaft 3 is connected to a steering spindle 4 via a transmission mechanism (not shown) such as a well-known worm gear or the like, so that the steering spindle 4 can be driven by rotation of the second shaft 3.

A pair of front wheels 5 and 6 are rotatably mounted on both ends of the steering spindle 4.

The first shaft 1 is provided with a first rotation detecting unit 7, and the second shaft 3 is provided with a second rotation detecting unit 8.

The first and second rotation detecting units 7 and 8 are well-known variable reluctance type resolvers (for example, this is disclosed in Japanese opened patent 2002-174535 and USP-5920135) constituted by rotors 7a and 8a, which are composed of only cores having no winding, and by stators 7b and 8b. Further, the rotor 7a is mounted on the first shaft 1, and the rotor 8a is mounted on the second shaft 3.

Thus, in the above-mentioned construction, when the steering wheel 2 is turned, a first rotation angle of the first shaft 1 is detected by the first rotation detecting unit 7, and a second rotation angle of the second shaft 3 is detected by the second rotation detecting unit 8. By processing the respective rotation angles with a not-shown control unit for processing signals, an angular difference between these rotation angles is detected.

According to the level of this angular difference, a well-known power assist system is controlled, whereby an optimum control of a power steering can be performed.

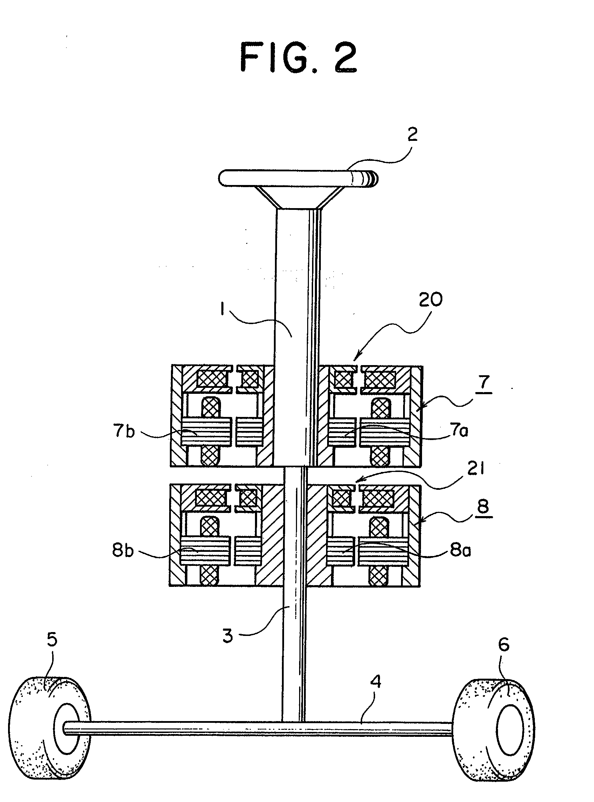

Moreover, in another structure shown in Fig. 2, each of the rotation detecting units 7 and 8 is not the above-mentioned variable reluctance type resolver but a rotary transformer type resolver having well-known first and second rotary transformers 20 and 21. The respective rotors 7a and 8a have rotor windings (not shown), to and from which signals are sent and received through the above-mentioned respective rotary transformers 20 and 21.

Here, since other elements have the same construction as those of Fig. 1, the same elements are denoted by the same reference numerals and the explanation thereof are omitted herein.

In addition, the above-mentioned structure of connection of the first shaft 1 and the second shaft 3 can be applied to all structures currently used.

Since the steering rotation detector according to the present invention is constructed as described above, the following effect can be obtained.

In short, since each of the rotation detecting units mounted on the first and second shafts for constituting the steering is the resolver, the detection of the rotation angle is performed in a completely non-contact state, and operation of the power steering based on the high-precision angular difference can be obtained.

## Claims

1. A steering rotation detector, comprising:
a first rotation detecting unit for detecting a first rotation angle of a first shaft connected to a steering wheel; and
a second rotation detecting unit for detecting a second rotation angle of a second shaft connected to the first shaft,
in which wheels are steered by means of rotation of the second shaft, and at the same time an angular difference between the first and second rotation angles detected by the first and second rotation detecting units is obtained,
wherein each of the first and second rotation detecting units is a resolver.

2. A steering rotation detector according to claim 1, wherein the resolver is a variable reluctance type resolver.

3. A steering rotation detector according to claim 1, wherein the resolver is a rotary transformer type resolver.
